# EUROPEAN PATENT APPLICATION

(11) **EP 4 234 641 A1**
(43) Date of publication of application: **30.08.2023**
(21) Application number: 22159029.2
(22) Date of filing: 25.02.2022
(51) Int. Cl.: C09D 5/00

(54) **COMPOSITIONS, COMPRISING MODIFIED TITANIUM DIOXIDE NANOPARTICLES AND USES THEREOF**

(71) Applicant: BASF SE, 67056 Ludwigshafen am Rhein (DE)
(72) Inventor: GRIGORENKO, Nikolay A, 4057 Basel (CH); OSWALD, Andre, 4133 Muttenz (CH)
(74) Representative: BASF IP Association

(57) **Abstract**

The present invention relates to compositions, comprising (A) titanium dioxide nanoparticles,
(A1) which have volume average diameter (Dv50) in the range of from 1 to 10 nm, preferably 1 to 8 nm, more preferably 2 to 6 nm;
(A2) which are modified with peroxo groups, and
(A2) which optionally comprise surface modifying agents selected from the group consisting of phosphates, phosphonates, beta-diketones, tertiary amines, carboxylic acids and silanes, or combinations thereof; and
(B) one, or more reactive (radically polymerizable) diluents, with the proviso that the composition comprises a reactive diluent having at least 2 ethylenically unsaturated groups in the molecule; and
(C) an organic solvent, and the use of the compositions for coating surface relief micro- and nanostructures (e.g. holograms), manufacturing of optical waveguides, solar panels, light outcoupling layers for display and lighting devices and anti-reflection coatings. Coatings obtained from the coating composition have a high refractive index and holograms are bright and visible from any angle, when the coating compositions are applied to them.

## Description

The present invention relates to composition, comprising
(A) titanium dioxide nanoparticles,
(A1) which have volume average diameter (Dv50) in the range of from 1 to 10 nm, preferably 1 to 8 nm, more preferably 2 to 6 nm;
(A2) which are modified with peroxo groups, and
(A2) which optionally comprise surface modifying agents selected from the group consisting of phosphates, phosphonates, beta-diketones, tertiary amines, carboxylic acids and silanes, or combinations thereof; and
(B) one, or more reactive (radically polymerizable) diluents, with the proviso that the composition comprises a reactive diluent having at least 2 ethylenically unsaturated groups in the molecule; and
(C) an organic solvent, and the use of the compositions for coating surface relief micro- and nanostructures (e.g. holograms), manufacturing of optical waveguides, solar panels, light outcoupling layers for display and lighting devices and anti-reflection coatings. Coatings obtained from the coating composition have a high refractive index and holograms are bright and visible from any angle, when the coating compositions are applied to them.

WO2011080080A1 relates to compositions comprising nanoparticles of TiO₂ (such as, for example, Aeroxide P25, Evonik AG, Essen, Germany) having a mean particle diameter (D50) of about 3-150 nm at a concentration of about 1 -2000 g/L and H₂O₂ at a final concentration at about 2.5-25 % by volume. The composition has antimicrobial and anti-inflammatory properties and may be used for e.g. wound debridement.

WO2011/073194 relates to antimicrobial and/or anti-inflammatory compositions for implant cleaning and/or debridement of a hard surface in the oral cavity, which comprises
a. nanoparticles of TiO₂, having a mean particle diameter (D50) of 10-100 nm at a concentration between 0.5-500 g/L
b. H₂O₂ at a concentration of at the most 7.5% by volume, and
c. solid microparticles having a mean particle diameter (D50) of 100-200 µm at a concentration between about 0.5-300 g/L. The composition being antibacterial, without causing microbial resistance, and anti-inflammatory.

WO2004060555A1 relates to aqueous coating compositions comprising a metal peroxide and a minor amount of a water soluble polymeric agent. The water-soluble polymeric agent is preferably a polyethylene oxide silane, an acrylic aliphatic urethane polymer, a para bis cyclohexyl methane diamine, or the reaction product of a water- soluble aliphatic diisocyanate and a tertiary amine. The metal peroxide is preferably a titanium peroxide sol. In addition, WO2004060555A1 relates to a process for producing a self-cleaning, photocatalytically-active, thin, colorless, water- insoluble coatings on substrates comprising
(a) producing an aqueous composition containing a metal peroxide and photochemically-active metal oxide particles having a size within the range of about 6 to 10 nanometers, some of which are dissolved in the composition;
(b) adding a water-soluble polymeric agent to the composition of step a), where the quantity of the water-soluble polymeric agent comprises from about 5 to about 50 percent by weight based on the total dry weight of the components of the composition;
(c) coating the substrate with the solution of step b) at a temperature below 100°C; and
(d) drying the coated substrate at a temperature below 100°C. A composition was prepared by mixing titanyl peroxide solution, nano anatase particles, and polyethylene oxide silane.

CN107987579A describes a process for the preparation of nano coatings comprising:
(1) mixing nano titanium dioxide and polyethylene oxide powder at mass ratio of 2-5:10-20, ball milling for 1-2 h, standing at 100-500°C for 0.5-1 h, and cooling;
(2) mixing nano titanium dioxide powder active material, potassium persulfate, N,N-dimethylformamide, phosphorus pentoxide and deionized water at mass ratio of 2-4:3-6:1-5:0.5-1:15-50, adjusting pH to 3-6, heating to 40-70°C for 1-2 h, cooling, washing with deionized water for 3-6 times, drying, adding distilled water and hydrogen peroxide, standing at 40-60°C for 0.5-3 h, centrifuging for 15-30 min, and washing to obtain surface modified nano titanium dioxide powder active material;
(3) mixing octadecyl acrylate, polystyrene emulsion, the surface modified nano titanium dioxide powder active material and acid anhydride at mass ratio of 4-7:3-10:2-6:1-10, and mixing.

CN107974114A describes a preparation method of nano-coating. The nano-coating is prepared from octadecyl acrylate, polystyrene emulsion, surface modified nano-titania powder active material and acid anhydride with mass ratio of (4-7):(3-10):(2-6):(1-10). The nano-titania powder active material is prepared by ball milling nano-titania powder and polyoxyethylene powder, heating to 100-500°C, holding for 0.5-10 h, and naturally cooling to room temperature. The nano-titania powder active material is subjected to surface modification, which includes mixing nano-titania powder active material, potassium persulfate, N,N-dimethylformamide, phosphorus pentoxide and deionized water, controlling the pH to be 3-6 with concentrated sulfuric acid, heating to 40-70°C, stirring for 1-2 h, cooling to room temperature, cleaning, drying to obtain solid powder, adding distilled water and hydrogen peroxide, reacting at 40-60°C for 0.5-3, centrifuging, cleaning, and drying.

CN107892832A describes a nano-coating which is prepared from octadecyl acrylate, polystyrene emulsion, surface modified TiO₂ nanopowder active material and acid anhydride at a weght ratio of (4-7):(3-10):(2-6):(1-10) by mixing. The surface modified TiO₂ nanopowder active material is prepared by ball milling to mix TiO₂ nanopowder and polyoxyethylene, heating at 100-500°C, and cooling to normal temperature; and performing surface modification by mixing the TiO₂nanopowder active material, potassium persulfate, N,N-dimethylformamide, phosphorus pentoxide and deionized water, controlling pH at 3-6 with concentrated sulfuric acid, stirring at 40-70°C, cooling to room temperature, washing the precipitate, drying to obtain solid powder, adding distilled water and hydrogen peroxide, reacting at 40-60 °C for 0.5-3 h, centrifugally separating, washing the product, and drying; and mixing with octadecyl acrylate, polystyrene emulsion and acid anhydride.

CN107974114A describes a preparation method of nano-coating, which is prepared from octadecyl acrylate, polystyrene emulsion, surface modified nano-titania powder active material and acid anhydride with mass ratio of (4-7):(3-10):(2-6):(1-10). The nano-titania powder active material is prepared by ball milling nano-titania powder and polyoxyethylene powder, heating to 100-500°C, holding for 0.5-10 h, and naturally cooling to room temperature. The nano-titania powder active material is subjected to surface modification, which includes mixing nano-titania powder active material, potassium persulfate, N,N-dimethylformamide, phosphorus pentoxide and deionized water, controlling the pH to be 3-6 with concentrated sulfuric acid, heating to 40-70°C, stirring for 1-2 h, cooling to room temperature, cleaning, drying to obtain solid powder, adding distilled water and hydrogen peroxide, reacting at 40-60°C for 0.5-3, centrifuging, cleaning, and drying.

CN108793763A discloses a preparation method of homogeneous antistatic film material, which comprises the following steps: mixing titanyl sulfate and deionized water, stirring, adjusting pH, filtering and collecting filter cake, drying, grinding, sieving to get sieving powder; mixing the sieving powder and deionized water, ultrasonic dispersing, adding hydrogen peroxide, standing, aging, reacting to get modified sol; mixing antimony chloride, tin chloride, isopropanol and anhydrous ethanol, heating, adding ammonia water, and heating to get matrix sol; mixing the modified sol and matrix sol, water bath heating to get modified antistatic sol; coating the modified antistatic sol on the surface of glass plate, drying, heating for reaction, collecting the solidified film to get the antistatic film material.

N.S. Shabanov et al., Journal of Colloid and Interface Science 498 (2017) 306-312 describe nano-sized titanium dioxide in the anatase phase, which was synthesized by means of hydrothermal methods and treated with hydrogen peroxide to form Peroxy-Titanium Complexes (PTCs). The influence of hydrogen peroxide on the structural, optical and rheological properties of titanium dioxide and its colloidal solutions were assessed and a practical demonstration of a low temperature compliant digitally printed anatase thin film was given. H₂O₂:TiO₂ aqueous suspensions co-formulated with ethylene glycol, diethylene glycol and glycerine, respectively were deposited by means of digital inkjet printing,

E. V. Savinkina et al., Cryst.Eng.Comm. 2015, 17(37), 7113-7123 describe a new phase, where peroxo groups are incorporated into titania particles, along with anatase and hydrated η-TiO₂ with peroxo groups on the surface of titania nanoparticles. The titania particles were prepared by introduction of H₂O₂ into reaction mixtures while synthesizing TiO₂from TiOSO₄ or by cold impregnation of pre-synthesized TiO₂.

JP2005095765A discloses a method for applying clear photocatalytic coatings containing peroxo-modified anatase- or rutile-type titania particles on plastered surfaces, thus imparting anti-soiling, air-purifying, and antimicrobial properties to the surfaces.

JP2007217599A is directed to metal oxide photocatalyst-containing transparent coating materials for food packaging materials, their manufacture, and food packaging materials using them. The coating materials contain metal oxides as photocatalysts, uncured resins, and thickening agents. A composition, containing Miracle Titan (dispersion containing anatase TiO₂sol and peroxotitanic acid), aq. solution of methylcellulose, and an ethanol solution of methyl methacrylate was applied on a polypropylene film, dried, and photocured to give a coating showing UV shielding ratio ≥70%.

JP2018062546A relates to a paint which comprises (A) 15-30 parts of an acrylic polyol resin and 1-6 parts of an aliph. polyisocyanate; (B) a solid component contg. 4-9 parts of an IR shielding inorg. compd. fine particles , 0.1-2 parts of an anatase type titanium oxide fine particles and 0.1-2 parts of a peroxotitanic acid in terms of titanium oxide; (C) 35-55 parts of a first solvent which is an amphiphilic solvent having a b.p. of 140-200°C; (D) 1-3 parts of a second solvent which is the same or different from the first solvent; and (E) 15-30 parts water, wherein the paint is uniformly dispersed in a solvent having water content of 20-50 wt.% when the total of mass of the amphiphilic solvent and the mass of water is 100 wt.%.

Zou J. et al., Journal of Alloys and Compounds 2010, 497(1-2), 420-427 describe that an amorphous TiO₂sol sensitized with H₂O₂ shows an enhancement of photocatalytic activity.

EP3687828 describes a method of forming a security device, the method comprising:
selectively providing a high refractive index (HRI) layer to a first outwardly facing surface of a security device substrate, the HRI layer comprising a substantially transparent host material and particles having a dimension along at least one axis less than 200nm, preferably less than 100nm, such that they are substantially non-scattering to visible light and the HRI layer is substantially transparent to visible light, and wherein;
the particles have a refractive index of at least 1.8 and are present within the host material in a proportion such that the resultant refractive index of the HRI layer is at least 1.6.

AU2011232304B2 discloses a security device comprising: (a) a substrate; and (b) a transparent protective coating, wherein (i) the substrate has a surface relief structure, or (ii) the coating forms all or part of a surface relief structure; wherein, said coating has a refractive index greater than the refractive index of the surface relief structure or the substrate and said coating comprises particles of at least one metal oxide which have a primary crystallite size from 1 to 100 nm; and wherein for alternative (i) the surface relief structure is filled by the coating to give a substantially flat surface, and wherein for alternative (ii) the surface relief structure is filled by a varnish to give a substantially flat surface; and wherein the transparent protective coating maintains the optical effect of the surface relief structure; and a method of protecting a surface relief structure said method comprising the following steps: (a) providing a dispersion comprising metal oxide particles having a primary crystallite size from 1 to 100 nm in an organic solvent, (b) applying said dispersion to a surface relief structure, and (c) removing the solvent so as to form a transparent coating, wherein the coating has a refractive index greater than the refractive index of the surface relief structure; and wherein the transparent coating maintains the optical effect of the surface relief structure; and wherein the surface relief structure is filled by the coating to give a substantially flat surface.

EP2042343A1 describes a security device comprising:
a substrate including a diffractive microstructure; and
a reflective layer selectively overlaying at least a portion of the diffractive microstructure, the reflective layer comprising a liquid vehicle and a plurality of reflective nanoparticles mixed within the liquid vehicle, wherein the combination of the diffractive microstructure and the reflective layer provides a desired optical effect when the security device is viewed from a number of predetermined relative observation points. The average particle size of the reflective nanoparticles ranges from about 1 nm to about 100 nm, especially from about 5 nm to about 20 nm.

EP2121337B1 relates to a highly refractive embossing lacquer for producing micro-optical arrangements, containing at least one binding agent comprising at least one radiation-hardening connecting system consisting of one or more organic compounds. The highly refractive embossing lacquer is characterised in that at least one fraction of the organic compounds of the radiation-hardening connecting system consists of molecules having at least one element that can be polarised such that a polymer material having a refraction index of more than 1.5 is formed during radiation-hardening. The invention also relates to a security element that is produced with at least one micro-optical mark of authenticity. Micro-optical marks of authenticity, according to the invention, allow the security elements that are so thin they can be easily introduced into the valuable documents, to be produced.

WO2019/016136 discloses Surface functionalized titanium dioxide nanoparticles treated with a) a phosphonate of formula 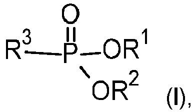 or a mixture of phosphonates of formula (I), wherein R¹ and R² are independently of each other hydrogen, or a C₁-C₄alkyl group,
R³ is a group CH₂=CH-, or a group of formula -[CH₂]ₙ-R⁴, wherein
n is an integer of 1 to 12,
when n > 3 one -CH₂- may be replaced by -S- with the proviso that S is not directly linked to P, or R⁴,
R⁴ is hydrogen, or a group of formula
R⁵ is hydrogen, or C₁-C₄ alkyl group,
R⁶ is hydrogen, or C₁-C₄ alkyl group,
X¹ is O, or NH, and 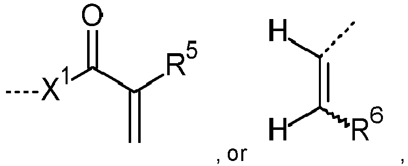
b) bonded with an alkoxide of formula R⁷O⁻ (II) and/or 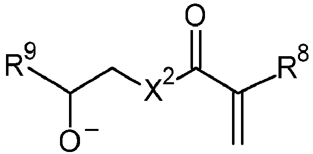 (III), wherein
R⁷ is a C₁-C₈alkyl group, which may be interrupted one or more times by -O- and/or substituted one or more times by -OH,
R⁸ is hydrogen, or a C₁-C₄alkyl group,
R⁹ is hydrogen, -CH₂OH, -CH₂SPh, -CH₂OPh, or a group of formula R¹⁰-[CH₂OH-O-CH₂]ₙ₁-,
n1 is an integer of 1 to 5,
X² is O, or NH,
R¹⁰ is a group of formula -CH₂-X³-CH₂-C(=O)-CR¹¹=CH₂,
X³ is O, or NH, and
R¹¹ hydrogen, or a C₁-C₄alkyl group.

WO2021/052907 relates to a process for the preparation of single, or mixed metal oxide nanoparticles comprising the following steps:
a) preparing a mixture, comprising a metal oxide precursor compound(s), a solvent, a tertiary alcohol, or a secondary alcohol, wherein the tertiary alcohol and secondary alcohol eliminate water upon heating the mixture to a temperature of above 60°C, or mixtures, containing the tertiary alcohol(s) and/or the secondary alcohol(s) and optionally water,
b) heating the mixture to a temperature of above 60°C,
c) treating the obtained nanoparticles with a base, especially a base which is selected from the group consisting of alkali metal alkoxides, alkali metal hydroxides, alkali metal salts of carboxylic acids, tetraalkylammonium hydroxides, trialkylbenzylammonium hydroxides and combinations thereof, wherein
the metal oxide precursor compound(s) is selected from the group consisting of metal alkoxides of formula Me(OR¹²)ₓ (I), metal halides of formula Me'(Hal)_{x'} (II) and metal alkoxyhalides of formula Me"(Hal')ₘ(OR¹²')ₙ (III) and mixtures thereof, wherein Me, Me' and Me" are independently of each other titanium, tin, tantalum, niobium, hafnium, or zirconium;
x represents the valence of the metal and is either 4 or 5,
x' represents the valence of the metal and is either 4 or 5;
R¹² and R^{12'} are independently of each other a Ci-Csalkyl group;
Hal and Hal' are independently of each other CI, Br or I;
m is an integer of 1 to 4;
n is an integer of 1 to 4;
m+n represents the valence of the metal and is either 4 or 5;
the solvent comprises at least one ether group and is different from the tertiary alcohol and
the secondary alcohol;
the ratio of the sum of moles of hydroxy groups of tertiary alcohol(s) and secondary alcohol(s) to total moles of Me, Me' and Me" is in the range 1:2 to 6:1.

PCT/EP2021/072873 relates to coating compositions, comprising
i) single or mixed metal oxide nanoparticles, wherein the volume average diameter (Dᵥ50) of the metal oxide nanoparticles is in the range of 1 to 20 nm; the nanoparticles comprise at least one volatile surface-modifying compound selected from alcohols, β-diketones, carboxylic acids and β-ketoesters and mixtures thereof, wherein the total amount of volatile surface-modifying compounds is at least 5 % by weight, preferably at least 10 % by weight based on the amount of metal oxide nanoparticles, and ii) a solvent, coatings obtained therefrom and the use of the comositions for coating surface relief micro- and nanostructures (e.g. holograms), manufacturing of optical waveguides, solar panels, light outcoupling layers for display and lighting devices and anti-reflection coatings. Coatings obtained from the coating composition have a high refractive index and holograms are bright and visible from any angle, when the coating compositions are applied to them.

Takahara Y.K. et al. (Journal of Applied Electrochemistry 2005, 35, 793-797) describes photooxidation of organic compounds in a solution containing hydrogen peroxide and TiO2 particles under visible light. Cyclohexane was oxidized under visible light in a titanium dioxide suspension containing hydrogen peroxide. Cyclohexanol and cyclohexanone were detected as products. Under similar experimental conditions, nonyl aldehyde was oxidized to nonylic acid. The reaction rate for the oxidation on rutile particles was faster than that on anatase particles. When hydrogen peroxide was added to suspensions of these particles, both rutile and anatase particles became yellow-colored due to the formation of peroxide complexes on their surfaces. The difference between the reaction rates for rutile and anatase particles suggests that the properties of the peroxide complexes formed on these particles are different. The properties of these complexes were studied by UV-vis spectroscopy.

There is a long-standing market need for transparent and colorless printable materials with high refractive index (HRI). Although, solutions for thin layers (up to 100 nm) of HRI-materials are known, the thick layers remain an unaddressed challenge, either from cost or performance point of view.

Hence, it is the object of the present invention to provide modified titanium dioxide nanoparticles and compositions, comprising them, which allow good curability (crosslinking of monomers) in thick layers with relatively low UV-dose.

Organic peroxides are a well-known class of thermal radical initiators. Typical photoinitiators are also of organic nature. The present invention takes advantage of the combination of a well-known photoactivity of titanium dioxide, especially, in anatase crystal phase, and ability of peroxides to initiate radical polymerization under suitable conditions. Thus, peroxide-modified titanium dioxide nanoparticles were found to be highly active in inducing the radical curing of compositions, comprising them, at high loadings of titanium dioxide and relatively low UV-dose.

Accordingly, the present invention relates to compositions, comprising
(A) titanium dioxide nanoparticles,
(A1) which have volume average diameter (Dᵥ50) in the range of from 1 to 10 nm, preferably 1 to 8 nm, more preferably 2 to 6 nm;
(A2) which are modified with peroxo groups, and
(A2) which optionally comprise surface modifying agents selected from the group consisting of phosphates, phosphonates, beta-diketones, tertiary amines, carboxylic acids and silanes, or combinations thereof; and
(B) one, or more reactive (radically polymerizable) diluents, with the proviso that the composition comprises a reactive diluent having at least 2 ethylenically unsaturated groups in the molecule; and
(C) an organic solvent.

Compared to the particles, described in prior art, the peroxide-modified TiO₂particles of the present invention are compatible with water-free organic solvents and different unsaturated monomers, do not agglomerate upon evaporation of solvent during coating or printing and allow obtaining transparent cross-linked, chemically and mechanically resistant coatings with high refractive index.

Preferably, the coating composition comprises less than 1% w/w of water.

Preferably, the coating composition does not comprise an organic radical photoinitiator.

The pH of the coating composition is in the range of 3 to 10, preferably 3 to 7 as measured in a 1:1 mixture with water.

Preferably, the coating composition does not comprise a binder.

The molar ratio of peroxo groups, introduced into reaction with TiO₂nanoparticles in the form of inorganic or organic peroxide, to TiO₂is in general between 0.01 to 0.3, preferably 0.01 to 0.2, more preferably 0.01 to 0.15, most preferably 0.02 to 0.1.

The titanium dioxide nanoparticles modified with peroxo groups are prepared by treatment of the titanium dioxide nanoparticles with a peroxide which is preferably selected from the group consisting of H₂O₂, H₂O₂-urea complex, alkali metal percarbonates, ketone peroxides and organic peracids.

H₂O₂ and alkali metal percarbonates are more preferred.

Modification of TiO₂nanoparticles with peroxide groups is done by treatment of the titanium dioxide nanoparticles with a peroxide. The peroxide is preferably selected from the group consisting of H₂O₂, H₂O₂-urea complex, alkali metal percarbonates, ketone peroxides and organic peracids. H₂O₂ and alkali metal percarbonates are more preferred. The peroxide is added to the dispersion of TiO₂nanoparticles with vigorous stirring at a temperature of from 0° to 40 °C and then stirred at 20 to 30°C for 0.5 to 4 h. The obtained titanium dioxide nanoparticles modified with peroxo groups are then used for formulation experiments.

The TiO₂nanoparticles are contained in the composition of the present invention in an amount of from 3 to 40 % by weight.

The reactive diluent having at least 2 ethylenically unsaturated groups in the molecule may be a difunctional, trifunctional, tetrafunctional, pentafunctional, or hexafunctional diluent having two, three, four, five, or six unsaturated carbon-carbon bonds, especially a difunctional (meth)acrylate, a trifunctional (meth)acrylate, a tetrafunctional (meth)acrylate, a pentafunctional (meth)acrylate, or a hexafunctional (meth)acrylate.

Examples of a difunctional (meth)acrylate are bisphenol A ethoxylate diacrylate, bisphenol A glycerolate diacrylate, glycerol diacrylate, triglycerol diacrylate, poly(ethylene glycol)-block-poly(propylene glycol)-block-poly(ethylene glycol) diacrylate, tricyclo[5.2.1.0^{2,6}]decanedimethanol diacrylate, (ethoxylated) trimethylolpropane methyl ether diacrylate, (propoxylated) trimethylolpropane methyl ether diacrylate, cyclohexanediol diacrylate, cyclohexanedimethanol diacrylate, cyclohexanedimethanol diacrylate, bisphenol A ethoxylate dimethacrylate, bisphenol A glycerolate dimethacrylate, glycerol dimethacrylate, triglycerol dimethacrylate, poly(ethylene glycol)-block-poly(propylene glycol)-block-poly(ethylene glycol) dimethacrylate, tricyclo[5.2.1.0^{2,6}]decanedimethanol dimethacrylate, (ethoxylated) trimethylolpropane methyl ether dimethacrylate, (propoxylated) trimethylolpropane methyl ether dimethacrylate, cyclohexanediol dimethacrylate and cyclohexanedimethanol dimethacrylate.

The difunctional (meth)acrylate is preferably a compound of formula 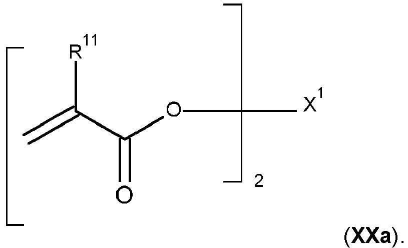 R¹¹ is independently in each occurrence H, or a methyl group;
X¹ is a group of formula 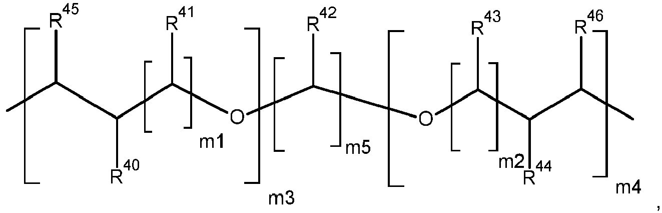 or 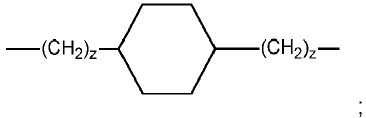 wherein
m1 is 0, or 1; m2 is 0, or 1;
m3 is 0, or an integer of 1 to 10; m4 is 0, or an integer of 1 to 10;
m5 is 0, an integer 1 to 8;
z is 0, or 1;
R⁴² is independently in each occurrence H, or a C₁-C₄alkyl group;
R⁴⁰, R⁴¹, R⁴³, R⁴⁴, R⁴⁵ and R⁴⁶ are independently of each other H, or a C₁-C₄alkyl group.

Examples of difunctional (meth)acrylates of formula **(XXa)** are propylene glycol diacrylate, dipropylene glycol diacrylate, tripropylene glycol diacrylate, tetrapropylene glycol diacrylate, ethylene glycol diacrylate, diethylene glycol diacrylate, triethylene glycol diacrylate, tetraethylene glycol diacrylate, 1,3-propanediol diacrylate, 1,2-butanediol diacrylate, 1,3-butanediol diacrylate, 1,4-butanediol diacrylate, pentanediol diacrylate, hexanediol diacrylate, (ethoxylated) 1,4-butanediol diacrylate, (propoxylated) 1,4-butanediol diacrylate, (ethoxylated) 1,5-pentanediol diacrylate, (propoxylated) 1,5-pentanediol diacrylate, (ethoxylated) 1,6-hexanediol diacrylate, (propoxylated) 1,6-hexanediol diacrylate, (ethoxylated) 1,8-octanediol diacrylate,(propoxylated) 1,8-octanediol diacrylate, (ethoxylated)neopentyl glycol diacrylate, (propoxylated)neopentyl glycol diacrylate, propylene glycol dimethacrylate, dipropylene glycol dimethacrylate, tripropylene glycol dimethacrylate, tetrapropylene glycol dimethacrylate, ethylene glycol dimethacrylate, diethylene glycol dimethacrylate, triethylene glycol dimethacrylate, tetraethylene glycol dimethacrylate, 1,3-propanediol dimethacrylate, 1,2-butanediol dimethacrylate, 1,3-butanediol dimethacrylate, 1,4-butanediol dimethacrylate, pentanediol dimethacrylate, hexanediol dimethacrylate, (ethoxylated) 1,4-butanediol dimethacrylate, (propoxylated) 1,4-butanediol dimethacrylate, (ethoxylated) 1,5-pentanediol dimethacrylate, (propoxylated) 1,5-pentanediol dimethacrylate, (ethoxylated) 1,6-hexanediol dimethacrylate, (propoxylated) 1,6-hexanediol dimethacrylate, (ethoxylated) 1,8-octanediol dimethacrylate,(propoxylated) 1,8-octanediol dimethacrylate, (ethoxylated)neopentyl glycol dimethacrylate, (propoxylated)neopentyl glycol dimethacrylate, polyethylene glycol diacrylate, polyethyleneglycol dimethacrylate, poly(propylene glycol) diacrylate, poly(propylene glycol) dimethacrylate.

Examples of trifunctional (meth)acrylates are trimethylolpropane triacrylate (TMPTA), trimethylolpropane trimethacrylate (TMPTMA), ethoxylated trimethylolpropane triacrylates (in particular selected from the group consisting of ethoxylated (EO3) trimethylolpropane triacrylates, ethoxylated (EO6) trimethylolpropane triacrylates, ethoxylated (EO9) trimethylolpropane triacrylates), propoxylated trimethylolpropane triacrylates (PO3 TMPTA), ethoxylated glycerol triacrylates and propoxylated glycerol triacrylates (GPTA), pentaerythritol triacrylates (PETA), a mixture of pentaerythritol triacrylate and tetraacrylate, ethoxylated pentaerythritol triacrylates, propoxylated pentaerythritol triacrylates (ethoxylated (EO3) pentaerythritol triacrylates, ethoxylated (EO6) pentaerythritol triacrylates, ethoxylated (EO9) pentaerythritol triacrylates) and mixtures thereof.

Examples of tetrafunctional (meth)acrylates are bistrimethylolpropane tetraacrylate (DiTMPTA), pentaerythritol tetracrylate (PETA), tetramethylolmethane tetramethacrylate, pentaerythritol tetramethacrylate, bistrimethylolpropane tetraacrylate, bistrimethylolpropane tetramethacrylate, ethoxylated bistrimethylolpropane tetraacrylate, propoxylated bistrimethylolpropane tetraacrylate, ethoxylated pentaerythritol tetraacrylate (EPETA), propoxylated pentaerythritol tetraacrylate, dipentaerythritol tetraacrylate, ethoxylated dipentaerythritol tetraacrylate, propoxylated dipentaerythritol tetraacrylate and mixtures thereof.

Examples of pentafunctional (meth)acrylates are dipentaerythritol pentaacrylate, sorbitol pentaacrylate and mixtures thereof.

Examples of hexafunctional (meth)acrylates are dipentaerythritol hexaacrylate, EBECRYL^{®} 1290, which is a hexafunctional aliphatic urethane hexaacrylate and mixtures thereof.

More preferably the reactive diluent having at least 2 ethylenically unsaturated groups in the molecule is selected from bis(4-vinylthiophenyl)sulfide, bis(4-methacryloylthiophenyl)sulfide, divinyladipate, dipropylene glycol diacrylate, tripropylene glycol diacrylate, dipropylene glycol dimethacrylate, tripropylene glycol dimethacrylate, diethylene glycol diacrylate, triethylene glycol diacrylate, diethylene glycol dimethacrylate, triethylene glycol dimethacrylate, butanediol diacrylate, butanediol dimethacrylate, hexanediol diacrylate, hexanediol dimethacrylate, octanediol diacrylate, octanediol dimethacrylate, nonanediol diacrylate, nonanediol dimethacrylate, decanediol diacrylate, decanediol dimethacrylate, cyclohexanediol diacrylate, cyclohexanediol dimethacrylate, cyclohexanedimethanol diacrylate, cyclohexanedimethanol dimethacrylate, (ethoxylated)neopentyl glycol diacrylate, (propoxylated)neopentyl glycol diacrylate, (ethoxylated)neopentyl glycol dimethacrylate, (propoxylated)neopentyl glycol dimethacrylate, trimethylolpropane triacrylate (TMPTA), trimethylolpropane trimethacrylate (TMPTMA), ethoxylated trimethylolpropane triacrylates, ethoxylated trimethylolpropane trimethacrylates, propoxylated trimethylolpropane triacrylates, propoxylated trimethylolpropane trimethacrylates, ethoxylated glycerol triacrylates, ethoxylated glycerol trimethacrylates, propoxylated glycerol triacrylates, propoxylated glycerol trimethacrylates, bistrimethylolpropane tetraacrylate, bistrimethylolpropane tetramethacrylate, ethoxylated bistrimethylolpropane tetraacrylates, propoxylated bistrimethylolpropane tetraacrylates, pentaerythritol tetraacrylate, pentaerythritol tetramethacrylate, ethoxylated pentaerythritol tetraacrylates, ethoxylated pentaerythritol tetramethacrylates, propoxylated pentaerythritol tetraacrylates, propoxylated pentaerythritol tetramethacrylates, dipentaerythritol hexaacrylate, ethoxylated dipentaerythritol hexaacrylates, propoxylated dipentaerythritol hexaacrylates and mixtures thereof.

In addition to reactive diluents having at least 2 ethylenically unsaturated groups in the molecule the composition of the present application may comprise monofunctional diluents.

Examples of monofunctional vinylamides include N-vinyl-pyrrolidone, N-vinylcaprolactame, N-(hydroxymethyl)vinylamide, N-hydroxyethyl vinylamide, N-isopropylvinylamide, N-isopropylmethvinylamide, N-tert-butylvinylamide, N,N'-methylenebisvinylamide, N-(isobutoxymethyl)vinylamide, N-(butoxymethyl)vinylamide, N-[3-(dimethylamino)propyl]methvinylamide, N,N-dimethylvinylamide, N,N-diethylvinylamide and N-methyl-N-vinylacetamide.

Examples of monofunctional (meth)acrylamides include acryloylmorpholine, methacryloylmorpholine, N-(hydroxymethyl)acrylamide, N-hydroxyethyl acrylamide, N-isopropylacrylamide, N-isopropylmethacrylamide, N-tert-butylacrylamide, N,N'-methylenebisacrylamide, N-(isobutoxymethyl)acrylamide, N-(butoxymethyl)acrylamide, N-[3-(dimethylamino)propyl]methacrylamide, N,N-dimethylacrylamide, N,N-diethylacrylamide, N-(hydroxymethyl)methacrylamide, N-hydroxyethyl methacrylamide, N-isopropylmethacrylamide, N-isopropylmethmethacrylamide, N-tert-butylmethacrylamide, N-(isobutoxymethyl)methacrylamide, N-(butoxymethyl)methacrylamide, N-[3-(dimethylamino)propyl]methmethacrylamide, N,N-dimethylmethacrylamide and N,N-diethylmethacrylamide.

Further examples of a monofunctional diluent are N-vinyloxazolidinones of formula 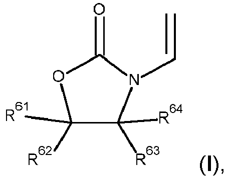 wherein R⁶¹, R⁶², R⁶³ and R⁶⁴ are independently of each other a hydrogen atom or an organic group having not more than 10 carbon atoms, such as, for example, N-vinyloxazolidinone (NVO), or N-vinyl-5-methyl oxazolidinone (NVMO);
N-Vinyl-pyrrolidone (NVP), N-Vinyl-caprolactam (NVC), trimethylolpropane formal (meth)acrylates, such as, for example, 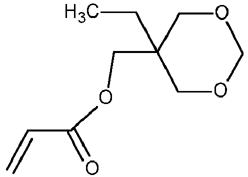 (trimethylolpropane formal acrylate) 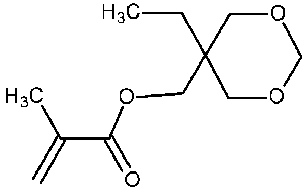 (trimethylolpropane formal methacrylate); - di(meth)acrylamides of formula 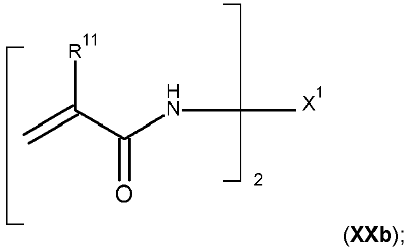 wherein R¹¹ is independently in each occurrence H, or a methyl group,
X¹ is a group of formula 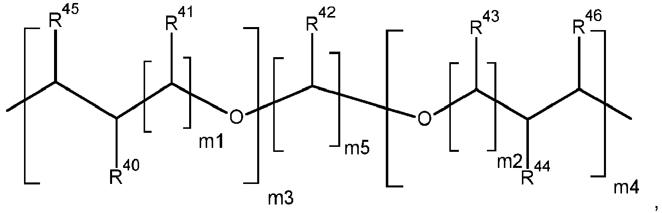 wherein
m1 is 0, or 1; m2 is 0, or 1;
m3 is 0, or an integer of 1 to 10; m4 is 0, or an integer of 1 to 10;
m5 is 0, or an integer 1 to 8;
R⁴² is independently in each occurrence H, or a C₁-C₄alkyl group;
R⁴⁰, R⁴¹, R⁴³, R⁴⁴, R⁴⁵ and R⁴⁶ are independently of each other H, or a C₁-C₄alkyl group; divinyl esters of formula 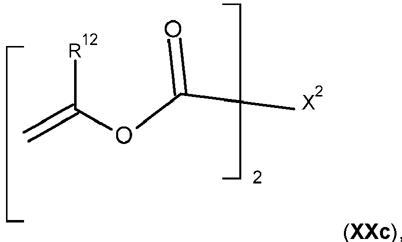 such as, for example, divinyl adipate, succinic acid divinyl ester, and
divinyl amides of formula 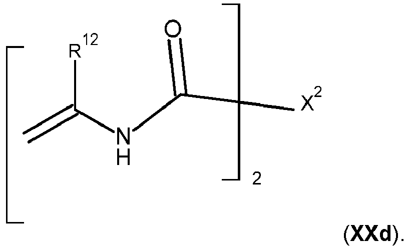 R¹² is independently in each occurrence H, or a methyl group,
X² is a group of formula 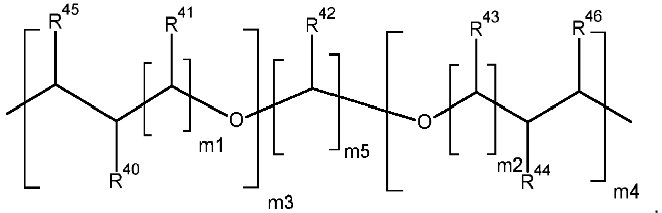 wherein
m1 is 0, or 1; m2 is 0, or 1;
m3 is 0, or an integer of 1 to 10; m4 is 0, or an integer of 1 to 10;
m5 is 0, or an integer 1 to 8;
R⁴² is independently in each occurrence H, or a C₁-C₄alkyl group;
R⁴⁰, R⁴¹, R⁴³, R⁴⁴, R⁴⁵ and R⁴⁶ are independently of each other H, or a C₁-C₄alkyl group.

Examples of monofunctional (meth)acrylates include without limitation octyl acrylate; decyl acrylate; lauryl acrylate, tridecyl acrylate; isodecyl acrylate; stearyl acrylate, 2-(2-ethoxyethoxy)ethyl acrylate, octyl methacrylate, lauryl methacrylate, isodecyl methacrylate, tridecyl methacrylate; tetradecyl methacrylate; isodecyl methacrylate and stearyl methacrylate, 3,3,5-trimethylcyclohexyl acrylate; isobornyl acrylate; 4-tert-butylcyclohexyl acrylate; cyclohexylmethacrylate, isobornyl methacrylate, tetrahydrofurfuryl acrylate, (5-ethyl-1,3-dioxan-5-yl)methyl acrylate, ethoxylated phenyl acrylate, ethoxylated phenyl methacrylate, nonyl phenol acrylate, nonyl phenol methacrylate, methoxy polyethyleneglycol acrylates, methoxy polyethyleneglycol methacrylates, methoxy polypropyleneglycol acrylates, methoxy polypropyleneglycol methacrylates, tetrahydrofurfuryl methacrylate, cyclic trimethylolpropane formal methacrylate, hydroxyethyl acrylate, hydroxypropyl acrylate and glycidyl acrylate, N-(2-hydroxyethyl)acrylate, hydroxyethyl methacrylate, hydroxypropyl methacrylate and glycidyl methacrylate, benzyl acrylate, 2-phenoxyethyl acrylate, ethoxylated (EO4) phenol acrylate; mixtures of ethoxylated (EO4) phenol acrylate and ethoxylated (EO8) nonylphenol acrylate; propoxylated (PO2) nonylphenol acrylate, ethoxylated o-phenylphenol acrylate, p-cumylphenoxylethyl acrylate, dicyclopentenyl acrylate and dicyclopentenyloxyethyl acrylate and 2-(N-butylcarbamoyloxy)ethyl acrylate.

The monofunctional (meth)acrylates may include hydroxyethyl acrylate, hydroxypropyl acrylate and glycidyl acrylate, N-(2-hydroxyethyl)acrylate, hydroxyethyl methacrylate, hydroxypropyl methacrylate, benzyl acrylate and glycidyl methacrylate.

In a preferred embodiment of the present invention the reactive diluent (B) comprises reactive diluents having a refractive index above 1.53, especially above 1.60, very especially above 1.70, such as, for example, (meth)acrylates, epoxides and episulfides. Acrylates, epoxides and episulfides, each with a functionality of greater than 1, are self-crosslinking radiation-curing compound systems.

A preferred vinyl compound is bis(4-vinylthiophenyl)sulfide with a refractive index of 1.695 (

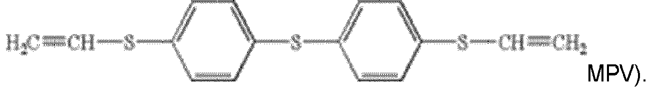

Preferred episulfides are disulfides as disclosed in US6,709,107.

Preferred acrylates are for example - 2-((1,3-dithiolan-2-yl)methylthio)ethyl methacrylate ( 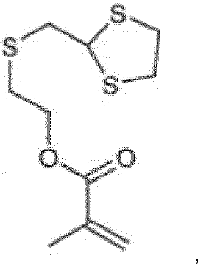 Muchchintala Maheswara et al., Polymer Journal 42 (2010) pages249-255), - phenylthioethyl acrylate 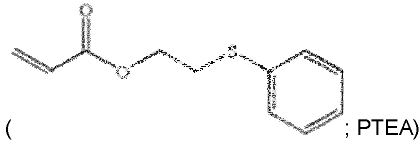 with a refractive index of 1.557, and
- bis(4-methacryloylthiophenyl)sulfide with a refractive index of 1.695 (

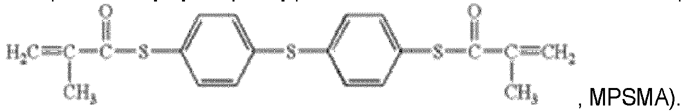

The ratio of reactive diluent (B) to titanium dioxide nanoparticles (A) is in the range of from 10 to 100% w/w of reactive diluent (B), preferably 15 to 75% w/w of reactive diluent (B), more preferably 20 to 60% of reactive diluent (B) relative to titanium dioxide nanoparticles (A).

In addition, the composition may comprise one, or more oligomers. The oligomer is preferably selected from (meth)acrylic oligomers, urethane (meth)acrylate oligomers, polyester (meth)acrylate oligomers, polyether based (meth)acrylate oligomers, amine modified polyether based (meth)acrylate oligomers or epoxy (meth)acrylate oligomers, more preferably urethane (meth)acrylate oligomers, polyester (meth)acrylate oligomers, polyether based (meth)acrylate oligomers, and epoxy (meth)acrylate oligomers and mixtures thereof.

In a preferred embodiment the titanium dioxide nanoparticles (A) comprise surface modifying agents selected from the group consisting of phosphates, tertiary amines, beta-diketones, silanes and combinations thereof, especially phosphates.

The surface modifying agents, especially phosphates, may improve the storage stability of the compositions.

The composition contains less than 5 % by weight, preferably less than 3 % by weight, more preferably less than 1 % by weight, most preferred less than 0.5 % by weight of water based on the total amount of the composition.

The coating obtained from the composition of the present application has a refractive index at 589 nm of greater than 1.6, preferably of greater than 1.65, more preferably of greater than 1.7, even more preferably of greater than 1.75, most preferably of greater than 1.8.

The coating obtained from the composition of the present application after exposure to UV light has preferably a transmission value of more than 85%, more preferably more than 90%, most preferred more than 95% in the wavelength range of 400 to 750 nm.

The thickness of the cured coating is in the range of 0.1 to 30 micrometer, preferably 0.2 to 20 micrometer, more preferably 0.2 to 10 micrometer, most preferably 0.5 to 6 micrometer.

The coating compositions of the present invention may be used for coating diffractive optical elements (DOEs), holograms, manufacturing of optical waveguides and solar panels, light outcoupling layers for display and lighting devices, high dielectric constant (high-k) gate oxides and interlayer high-k dielectrics, anti-reflection coatings, etch and CMP stop layers, optical thin film filters, optical diffractive gratings and hybrid thin film diffractive grating structures, high refractive index abrasion-resistant coatings, in protection and sealing (OLED), or organic solar cells.

Preferably, the coating composition comprises less than 1% w/w of water.

The pH of the coating composition is in the range of 3 to 10, preferably 3 to 7 as measured in a 1:1 mixture with water.

The coating composition according to the present invention may comprise further metal oxide, or mixed metal oxide nanoparticles having a Dᵥ50 which is larger than the Dᵥ50 of the metal oxide nanoparticles prepared by the method of the present invention. The further metal oxide, or mixed metal oxide nanoparticles have a Dᵥ50 in the range of 20 to 100 nm, especially 20 to 60 nm, very especially 20 to 40 nm. The metals of the metal oxide, or mixed metal oxide nanoparticles are selected from Zn (II), In (III), Sc (III), Y (III), La (III), Ce (IV), Ti (IV), Zr (IV), Hf (IV), Sn (IV), V (IV), Nb (V) and Ta (V), preferably Zn (II), Ce (IV), Ti (IV), Zr (IV), Hf (IV), Sn (IV), V (IV), Nb (V) and Ta (V), more preferably Zn(II), Ti (IV), Zr (IV) and Sn (IV) or mixtures thereof.

A coating obtainable from the coating composition according to the present invention has a refractive index of greater than 1.7, especially of greater than 1.8, very especially of greater than 1.9.

A method for forming the coating having a high refractive index on a substrate comprises the steps of:
a) providing a substrate, preferably carrying a surface relief nano- and/or microstructure;
b) applying the coating composition according to the present invention to the substrate by means of wet coating, or printing;
c) removing the solvent; and
d) exposing the dry coating to actinic radiation, especially UV-light.

In addition, the present invention relates to security, or decorative elements, comprising a substrate, which may contain indicia or other visible features in or on its surface, and on at least part of the said substrate surface, a coating according to the present invention, or a coating obtained according to the method of the present invention.

The expression "surface relief" is used to refer to a non-planar part of the surface of a substrate, or layer, and typically defines a plurality of elevations and depressions. In particularly advantageous embodiments, the surface relief structure is a diffractive surface relief structure. The diffractive surface relief structure may be a diffraction grating (such as a square grating, sinusoidal grating, sawtooth grating or blazed grating), a hologram surface relief or another diffractive device that exhibits different appearances, e.g. diffractive colours and holographic replays (such as, for example, a lens, or microprism), at different viewing angles. For the purposes of this specification, such surface relief structures will be referred to as diffractive optically variable image devices (DOVIDs).

In embodiments, the high refractive index (HRI) layer obtained from the coating composition of the present invention may further comprise a dispersion of scattering particles having a dimension along at least one axis such that the HRI layer exhibits a first colour when viewed in reflection and a second, different colour when viewed in transmission.

The coating of the present invention can be used in the manufacture of surface relief micro- and nanostructures, such as, for example, optically variable devices (OVD), such as, for example, a hologram.

The method for forming a surface relief micro- and/or nanostructure on a substrate comprising the steps of:
a) forming a surface relief micro- and/or nanostructure on a discrete portion of the substrate;
b) depositing the coating composition according to the present invention on at least a portion of the surface relief micro- and/or nanostructure;
c) removing the solvent; and
d) curing the dry coating by exposing it to actinic radiation, especially UV-light.

A further specific embodiment of the invention concerns a preferred method for forming a surface relief micro- and/or nanostructure on a substrate, wherein step a) comprises
a1) applying a curable compound to at least a portion of the substrate;
a2) contacting at least a portion of the curable compound with surface relief micro- and/or nanostructure forming means; and
a3) curing the curable compound.

Alternatively, the method for forming a surface relief micro- and/or nanostructure on a substrate comprises the steps of
a') providing a sheet of base material, said sheet having an upper and lower surface;
b') depositing the coating composition according to the present invention on at least a portion of the upper surface;
c') removing the solvent;
d') forming a surface relief micro- and/or nanostructure on at least a portion of the coating composition, such that said micro- and/or nanostructure is formed also in the base material, and
e') curing the coating composition by exposing it to actinic radiation, especially UV-light.

Yet a further specific embodiment of the invention concerns a preferred method for forming a surface relief micro- and/or nanostructure on a substrate, comprising the steps of:
a") providing a sheet of base material, said sheet having an upper and lower surface;
b") depositing the coating composition according to the present invention on at least a portion of the upper surface;
c") removing the solvent;
d") curing the dry coating by exposing it to actinic radiation, especially UV-light; and
e") forming a surface relief micro- and/or nanostructure on at least a portion of the coating composition, such that said micro- and/or nanostructure is formed also in the base material.

The (coating) composition of the present invention may be applied to the substrate by means of conventional printing press such as gravure, flexographic, ink jet, lithographic, offset, letterpress intaglio and/or screen process, or other printing process.

In another embodiment the composition may be applied by coating techniques, such as spraying, dipping, casting or spin-coating.

Preferably the printing process is carried out by gravure, flexographic, or by ink jet printing.

The resulting coatings, comprising the TiO₂nanoparticles, are transparent in the visible region. The transparent TiO₂nanoparticles containing layer has a thickness in the range of 0.1 to 30 micrometer, preferably 0.2 to 20 micrometer, more preferably 0.2 to 10 micrometer, most preferably 0.5 to 6 micrometer after drying. The TiO₂nanoparticles containing coating is preferably dried at below 120°C to avoid damage of organic substrates and/or coating layers.

The resulting products may be overcoated with a protective coating to increase the durability and/or prevent copying of the security element. The protective coating is preferably transparent or translucent. The protective coating may have refractive index of from about 1.2 to about 1.75. Examples of such coatings are known to the skilled person. For example, water borne coatings, UV-cured coatings or laminated coatings may be used. Examples for typical coating resins will be given below. Coatings having a very low refractive index are, for example, described in US7821691, WO2008011919 and WO2013117334.

The composition may be coated onto organic foils via gravure printing followed by a transparent overcoat subsequently being UV-cured (e.g. Lumogen OVD Varnish 311^{®}).

The high refractive index coating according to the present invention may represent the dielectric layer in a so-called Fabry Perot Element. Reference is made, for example, to (EP1504923, WO01/03945, WO01/53113, WO05/38136, WO16173696). In said embodiment the security element comprises a mutlilayer structure capable of interference, wherein the multilayer structure capable of interference has a reflection layer, a dielectric layer, and a partially transparent layer (EP1504923, WO01/03945, WO01/53113, WO05/38136, WO16173696), wherein the dielectric layer is arranged between the reflection layer and the partially transparent layer.

Suitable materials for the reflective layer include aluminum, silver, copper mixtures or alloys thereof. The partially transparent layer can be composed of a semi-opaque materials, including metals such as chromium, nickel, titanium, vanadium, cobalt, and palladium, as well as other metals such as iron, tungsten, molybdenum, niobium and aluminum having a suitable thickness of about 3 to 15 nm. Various combinations and alloys of the above metals may also be utilized, such as Inconel (Ni-Cr-Fe). Other partially transparent materials include metal compounds such as metal fluorides, metal oxides, metal sulfides, metal nitrides, metal carbides, metal phosphides, metal selenides, metal silicides, and combinations thereof.

The reflective layer is preferably an aluminum or silver layer and the dielectric layer is preferably formed from the (surface functionalized) TiO₂nanoparticles of the present invention.

The high refractive index coating according to the present invention may represent the partially transparent layers of a Fabry-Pérot resonator system and/or the reflection layer. The reflection layer may be also partially transparent.

In a further embodiment, the high refractive index coating according to the present invention may represent the semitransparent layer of a Fabry-Pérot resonator system and the second semitransparent layer may be represented by a continuous metallic layer, deposited, for example, by thermal evaporation method, or by a layer, comprising discrete metallic nanostructures capable of absorption of light in the visible wavelength range due to surface plasmon resonance, which may be deposited through vapor-phase metallization, for example, on a surface relief nanostructure, or by printing, or coating of compositions, comprising metal nanoparticles, especially copper, silver or gold nanoparticles ("plasmonic layer", see, for example, WO2011/064162, WO2012/176126, WO2020/083794 and WO2020/224982). The resulting optical effect observed from the side of the second semitransparent layer is a colored metallic reflection, modified by the interference color of the dielectric system in reflection. Observed from the high refractive index coating, the optical effect in reflection is the pure interference color resulting from the Fabry-Pérot resonator system. In transmission, observed from either the first surface or the second surface, the color is a subtractive mix of the absorption color from the plasmonic layer and the complementary color of the Fabry-Pérot resonator's interference color.

The plasmonic layer may also be manufactured by depositing a metal precursor composition on the underlying substrate or functional layer and exposing it to heat or actinic radiation as described, for example, in WO2016/170160A1, WO2018/210597 and WO2019/020682A1.

The high refractive index coating according to the present invention may be used in the fabrication of thin-film multilayer antireflective or reflective elements and coatings, comprising stacks of layers with different refractive indices. Reference is made, for example, to H. A. Macleod, "Thin-Film Optical Filters", published by Institute of Physics Publishing, 3rd edition, 2001; EP2806293A2 and DE102010009999A1.

In an additional embodiment the present invention is directed to a security, or decorative element, comprising a substrate, which may contain indicia or other visible features in or on its surface, and on at least part of the said substrate surface, a coating according to the present invention, or a coating obtained according to the method according to present invention.

The security element may comprise one, or more further functional layers, which are selected from black layers, white layers, continuous metallic layers, deposited, for example by thermal evaporation method, layers, comprising discrete metallic nanostructures capable of absorption of light in the visible wavelength range due to surface plasmon resonance, which may be deposited through vapor-phase metallization, for example, on a surface relief nanostructure, or by printing or coating of compositions, comprising metal nanoparticles, layers comprising surface relief nano- and/or microstructures, such as DOEs, micromirrors, microlenses, layers comprising magnetic pigments, cholesteric liquid crystal layers, fluorescent layers, interference layers, such as, for example, a Fabry-Perot stack; colored layers, IR-absorbing layers, colored IR-transparent layers,conductive layers, adhesive and release layers.

The functional layers might be fully, or partially printed on the substrate and/or underlying layer.

The security element of the present invention might be provided as a laminate onto a security document, or as a window on the security document, or embedded as a (windowed) thread into the security document.

The security document of the present is selected from a banknote, a tax stamp, an ID-card, avoucher, an entrance ticket and a label.

If applied on top of surface relief nano- and/or microstructure, the high refractive index layer may conformally adhere to the said surface relief nano- and/or microstructure, or at least partially flatten it. Reference is made to EP2042343A1 and WO2011116419. (Partial) flattening means in this context that the difference in distance between the highest features of the relief structure and the lowest features of the relief structure is reduced in the coated structure, compared to the uncoated one. Full flattening means in this context that the difference in distance between the highest features of the relief structure and the lowest features of the relief structure is zero.

The HRI coating composition of the present invention may be applied by printing to at least a part of surface relief nano- and/or microstructure, or to the whole structure.

In a particularly preferred embodiment the present invention is directed to
- a security element, comprising in this order

i) an overprint varnish layer, a PET layer, an adhesive layer, or a release layer;
ii) a colorshift layer, such as, for example, a cholesteric liquid crystal layer;
iii) a layer of a partially black print, or negative microtext;
iv) the HRI coating layer of the present invention, which flatten the surface relief nano- and/or microstructure (v);
v) a surface relief nano- and/or microstructure;
vi) optionally a PET layer;
vii) optionally functional layer(s), comprising fluorescent, magnetic, NIR and conductive materials; and
viii) an overprint varnish layer, a PET layer, an adhesive layer, or a release layer; or

- a security element, comprising in this order

i) an overprint varnish layer, a PET layer, an adhesive layer, or a release layer;
ii) a colorshift layer, such as, for example, a cholesteric liquid crystal layer;
iii) a layer of a partially black print, or negative microtext;
iiia) optionally a planarization layer;
iv) the HRI coating layer of the present invention, which conformally adhere to the the surface relief nano- and/or microstructure (v);
v) a surface relief nano- and/or microstructure;
vi) optionally a PET layer;
vii) optionally functional layer(s), comprising fluorescent, magnetic, NIR and conductive materials; and
viii) an overprint varnish layer, a PET layer, an adhesive layer, or a release layer;

In another preferred embodiment the present invention is directed to security devices described, in principal, in WO2009/066048.

WO2009/066048 relates to security devices (10) comprising a first and a second layer (11a, lib) of a colourshifting material at least partially overlying each other and each having different colourshifting properties and, at least partially applied over an exposed surface of one of the colourshifting layers (11a, lib), a light control layer (12) having a surface structure which modifies the angle of reflected light, such that light reflected by the security device is seen at a different viewing angle and in at in least one region, a light absorbing layer (30) between the two colourshifting layers (11a, 11b). The HRI coating of the present invention may be the light control layer 12 that would allow to overvarnish and flatten the light control layer 12 with an overprint varnish. Alternatively, the light control layer 12 could be overcoated with HRI composition of the present invention.

In Figure 16 of WO2009/066048 the security device 10 comprises a first layer 11a of an optically variable liquid crystal material and a second layer 11b of an optically variable liquid crystal material, which exhibits different reflective characteristics to the first layer 11a. A partial absorbing layer 30 is applied between the first and second liquid crystal layers 11a and 11b. A light control layer 12, comprising a series of parallel linear microprisms, is applied to the second liquid crystal layer 11b. The light control layer 12 may be a partial layer, as described in reference to Figure 4, or a full layer. If the device 10 is intended to be viewed in reflection, it is preferable to have an additional dark absorbing layer 31 present under the first liquid crystal layer 11a.

The application of a partial absorbing layer 30 between the two liquid crystal layers 11a, 11b creates two optically variable regions, Regions A and B. In Region A there is no absorbing layer 30 between the two liquid crystal layers 11a, 11b such that the wavelength of reflected light, at any given angle of incidence, is a result of the additive mixing of the individual wavelengths of light reflected from the two liquid crystal layers 11a, 11b. In Region B there is an absorbing layer 30 between the two liquid crystal layers and the wavelength of reflected light, at any given angle of incidence, is solely the reflected light from the second liquid crystal layer 11b.

The absorbing layer 31 which lies under the first liquid crystal film layer 11a may be applied in the form of a design, creating a further optically variable Region C, as shown in Figure 17 OF WO2009/066048. In Region C there is no absorbing layerunder either of the liquid crystal layers 11a, 11b and when the device 10 is positioned on a reflective background, the intensity of the transmitted colour reflected back through the liquid crystal layers 11a, 11b saturates the reflective colour. The transmitted and reflected colours are complementary, for example, a red to green colourshift in reflection is seen as a cyan to magenta colourshift in transmission.

In another preferred embodiment the present invention is directed to a security device 10 described, in principal, in Figure 1 of of WO2013/017865. Figure 1 of WO2013/017865 illustrates a security device 10, comprising a carrier substrate 11. This substrate 11 is preferably a translucent or transparent polymeric film such as polyethylene (PET) or biaxially oriented polypropylene (BOPP). A light deflection structure 12 is applied to the substrate 11, either as a separate layer or formed in a surface of the substrate 11. The light deflection structure 12 is one that has facets or lenses which, when provided with a reflective coating 14 strongly reflects light substantially back to the light source when the light source is substantially parallel to the normal of the substrate and when the light source is away from the normal to the security device 10. One form of suitable light reflection structure 12 comprises a prismatic structure comprising a series of adjacent parallel linear prisms 17 with planar facets arranged to form a grooved surface. These can be formed by either thermally embossing the prisms into the substrate 11 or by casting the prisms into a resin which is curable by ultra-violet light or e- beam irradiation. Examples of other suitable light deflection structures 12 include, but are not limited to, a ruled array of tetrahedra, an array of square pyramids, an array of corner-cube structures, an array of hexagonal-faced corner-cubes and a saw-tooth prismatic array. Other structures may also be used, such as Fresnel lenses and lenticular lenses. The light deflection structure 12 is then provided with either positive or negative indicia 13 by coating or covering selected regions 15 of the light deflection structure 12 with the HRI coating layer 14 of the present invention, whilst leaving other regions 16 uncoated or uncovered.

Security devices of the sort described above can be incorporated into or applied to any article for which an authenticity check is desirable. In particular, such devices may be applied to or incorporated into documents of value such as banknotes, passports, driving licences, cheques, identification cards etc. The security device or article can be arranged either wholly on the surface of the base substrate of the security document, as in the case of a stripe or patch, or can be visible only partly on the surface of the document substrate, e.g. in the form of a windowed security thread. Security threads are now present in many of the world's currencies as well as vouchers, passports, travellers' cheques and other documents. In many cases the thread is provided in a partially embedded or windowed fashion where the thread appears to weave in and out of the paper and is visible in windows in one or both surfaces of the base substrate. One method for producing paper with so-called windowed threads can be found in EP-A-0059056. EP-A-0880298 and WO-A-03095188 describe different approaches for the embedding of wider partially exposed threads into a paper substrate. Wide threads, typically having a width of 2 to 6mm, are particularly useful as the additional exposed thread surface area allows for better use of optically variable devices. The security device or article may be subsequently incorporated into a paper or polymer base substrate so that it is viewable from both sides of the finished security substrate. Methods of incorporating security elements in such a manner are described in EP-A-1 141480 and WO-A-03054297. In the method described in EP-A-1 141480, one side of the security element is wholly exposed at one surface of the substrate in which it is partially embedded, and partially exposed in windows at the other surface of the substrate.

Base substrates suitable for making security substrates for security documents may be formed from any conventional materials, including paper and polymer. Techniques are known in the art for forming substantially transparent regions in each of these types of substrate. For example, WO-A-8300659 describes a polymer banknote formed from a transparent substrate comprising an opacifying coating on both sides of the substrate. The opacifying coating is omitted in localised regions on both sides of the substrate to form a transparent region. In this case the transparent substrate can be an integral part of the security device or a separate security device can be applied to the transparent substrate of the document. WO-A-0039391 describes a method of making a transparent region in a paper substrate. Other methods for forming transparent regions in paper substrates are described in EP-A-72350, EP-A-724519, WO-A-03054297 and EP-A-1398174.

The security device may also be applied to one side of a paper substrate so that portions are located in an aperture formed in the paper substrate. An example of a method of producing such an aperture can be found in WO-A-03054297. An alternative method of incorporating a security element which is visible in apertures in one side of a paper substrate and wholly exposed on the other side of the paper substrate can be found in WO-A-2000/39391.

Typically the security product includes banknotes, credit cards, identification documents like passports, identification cards, driver licenses, or other verification documents, pharmaceutical apparel, software, compact discs, tobacco packaging and other products or packaging prone to counterfeiting or forgery.

The substrate may comprise any sheet material. The substrate may be opaque, substantially transparent or translucent, wherein the method described in WO08/061930 is especially suited for substrates, which are opaque to UV light (non-transparent). The substrate may comprise paper, leather, fabric such as silk, cotton, tyvac, filmic material or metal, such as aluminium. The substrate may be in the form of one or more sheets or a web.

The substrate may be mould made, woven, non-woven, cast, calendared, blown, extruded and/or biaxially extruded. The substrate may comprise paper, fabric, man made fibres and polymeric compounds. The substrate may comprise any one or more selected from the group comprising paper, papers made from wood pulp or cotton or synthetic wood free fibres and board. The paper/board may be coated, calendared or machine glazed; coated, uncoated, mould made with cotton or denim content, Tyvac, linen, cotton, silk, leather, polythyleneterephthalate, polypropylene propafilm, polyvinylchloride, rigid PVC, cellulose, tri-acetate, acetate polystyrene, polyethylene, nylon, acrylic and polytherimide board. The polythyleneterephthalate substrate may be Melinex type film orientated polypropylene (obtainable from DuPont Films Willimington Delaware product ID Melinex HS-2).

The substrates being transparent films or non-transparent substrates like opaque plastic, paper including but not limited to banknote, voucher, passport, and any other security or fiduciary documents, self adhesive stamp and excise seals, card, tobacco, pharmaceutical, computer software packaging and certificates of authentication, aluminium, and the like.

In a preferred embodiment of the present invention the substrate is a non-transparent (opaque) sheet material, such as, for example, paper. Advantageously, the paper may be precoated with an UV curable lacquer. Suitable UV curable lacquers and coating methods are described, for example, WO2015/049262 and WO2016/156286.

In another preferred embodiment of the present invention the substrate is a transparent or translucent sheet material, such as, for example, polyethylene terephthalate, polyethylene naphthalate, polyvinyl butyral, polyvinyl chloride, flexible polyvinyl chloride, polymethyl methacrylate, poly(ethylene-co-vinyl acetate), polycarbonate, cellulose triacetate, polyether sulfone, polyester, polyamide, polyolefins, such as, for example, polypropylene, and acrylic resins. Among these, polyethylene terephthalate and polypropylene are preferred. The flexible substrate is preferably biaxially oriented.

The forming of an optically variable image on the substrate may comprise depositing a curable composition on at least a portion of the substrate, as described above. The curable composition, generally a coating or lacquer may be deposited by means of gravure, flexographic, ink jet and screen process printing. The curable lacquer may be cured by actinic radiations, preferably ultraviolet (UV) light or electron beam. Preferably, the curable lacquer is UV cured. UV curable lacquers are well known and can be obtained from e.g. BASF SE. The lacquers exposed to actinic radiations or electron beam used in the present invention are required to reach a solidified stage when they separate again from the imaging shim in order to keep the record in their upper layer of the sub-microscopic, holographic diffraction grating image or pattern (optically variable image, OVI). Particularly suitable for the lacquer compositions are mixtures of typical well-known components (such as photoinitiators, monomers, oligomers. levelling agents etc.) used in the radiation curable industrial coatings and graphic arts. Particularly suitable are compositions containing one or several photo-latent catalysts that will initiate polymerization of the lacquer layer exposed to actinic radiations. Particularly suitable for fast curing and conversion to a solid state are compositions comprising one or several monomers and oligomers sensitive to free-radical polymerization, such as acrylates, methacrylates or monomers or/and oligomers, containing at least one ethylenically unsaturated group, examples have already been given above. Further reference is made to pages 8 to 35 of WO2008/061930.

The UV lacquer may comprise an epoxy monomer from the CRAYNOR^{®} Sartomer Europe range (10 to 60%) and one or several acrylates (monofunctional and multifunctional), monomers which are available from Sartomer Europe (20 to 90%) and one, or several photoinitiators (1 to 15%) such as Darocure^{®} 1173 and a levelling agent such as BYK^{®}361 (0.01 to 1%) from BYK Chemie. The UV lacquer may also be used for overcoating.

The epoxy monomer is selected from aromatic glycidyl ethers and aliphatic glycidyl ethers. Aromatic glycidyl ethers are, for example, bisphenol A diglycidyl ether, bisphenol F diglycidyl ether, bisphenol B diglycidyl ether, bisphenol S diglycidyl ether, hydroquinone diglycidyl ether, alkylation products of phenol/dicyclopentadiene, e.g., 2,5-bis[(2,3-epoxypropoxy)phenyl]octahydro-4,7-methano-5H-indene (CAS No. [13446-85-0]), tris[4-(2,3-epoxypropoxy)phenyl]methane isomers (CAS No. [66072-39-7]), phenol-based epoxy novolaks (CAS No. [9003-35-4]), and cresol-based epoxy novolaks (CAS No. [37382-79-9]). Examples of aliphatic glycidyl ethers include 1,4-butanediol diglycidyl ether, 1,6-hexanediol diglycidyl ether, trimethylolpropane triglycidyl ether, pentaerythritol tetraglycidyl ether, 1,1,2,2-tetrakis[4-(2,3-epoxypropoxy)phenyl]ethane (CAS No. [27043-37-4]), diglycidyl ether of polypropylene glycol (α,ω-bis(2,3-epoxypropoxy)poly(oxypropylene), CAS No. [16096-30-3]) and of hydrogenated bisphenol A (2,2-bis[4-(2,3-epoxypropoxy)cyclohexyl]propane, CAS No. [13410-58-7]).

The one or several acrylates are preferably multifunctional monomers which are selected from trimethylolpropane triacrylate, trimethylolethane triacrylate, trimethylolpropane trimethacrylate, trimethylolethane trimethacrylate, tetramethylene glycol dimethacrylate, triethylene glycol dimethacrylate, tetraethylene glycol diacrylate, tripropylene glycol diacrylate (TPGDA), dipropylene glycol diacrylate (DPGDA), pentaerythritol diacrylate, pentaerythritol triacrylate, pentaerythritol tetraacrylate, dipentaerythritol diacrylate, dipentaerythritol triacrylate, dipentaerythritol tetraacrylate, dipentaerythritol pentaacrylate, dipentaerythritol hexaacrylate, tripentaerythritol octaacrylate, pentaerythritol dimethacrylate, pentaerythritol trimethacrylate, dipentaerythritol dimethacrylate, dipentaerythritol tetramethacrylate, tripentaerythritol octamethacrylate, pentaerythritol diitaconate, dipentaerythritol tris-itaconate, dipentaerythritol pentaitaconate, dipentaerythritol hexaitaconate, ethylene glycol diacrylate, 1,3-butanediol diacrylate, 1,3-butanediol dimethacrylate, 1,4-butanediol diitaconate, sorbitol triacrylate, sorbitol tetraacrylate, pentaerythritol-modified triacrylate, sorbitol tetra methacrylate, sorbitol pentaacrylate, sorbitol hexaacrylate, oligoester acrylates and methacrylates, glycerol diacrylate and triacrylate, 1,4-cyclohexane diacrylate, bisacrylates and bismethacrylates of polyethylene glycol with a molecular weight of from 200 to 1500, triacrylate of singly to vigintuply alkoxylated, more preferably singly to vigintuply ethoxylated trimethylolpropane, singly to vigintuply propoxylated glycerol or singly to vigintuply ethoxylated and/or propoxylated pentaerythritol, such as, for example, ethoxylated trimethylol propane triacrylate (TMEOPTA) and or mixtures thereof.

The photoinitiator may be a single compound, or a mixture of compounds. Examples of photoinitiators are known to the person skilled in the art and for example published by Kurt Dietliker in "A compilation of photoinitiators commercially available for UV today", Sita Technology Textbook, Edinburgh, London, 2002.

The photoinitiator may be selected from acylphosphine oxide compounds, benzophenone compounds, alpha-hydroxy ketone compounds, alpha-alkoxyketone compounds, alpha-aminoketone compounds, phenylglyoxylate compounds, oxime ester compounds, mixtures thereof and mixtures and mixtures thereof.

The photoinitiator is preferably a blend of an alpha-hydroxy ketone, alpha-alkoxyketone or alpha-aminoketone compound and a benzophenone compound; or a blend of an alpha-hydroxy ketone, alpha-alkoxyketone or alpha-aminoketone compound, a benzophenone compound and an acylphosphine oxide compound.

The curable composition is preferably deposited by means of gravure or flexographic printing. The curable composition can be coloured.

An OVD is cast into the surface of the curable composition with a shim having the OVD thereon, the holographic image is imparted into the lacquer and instantly cured via a UV lamp, becoming a facsimile of the OVD disposed on the shim (US4,913,858, US5,164,227, WO2005/051675 and WO2008/061930).

The curable coating composition according to the present invention may be applied to the OVD by means of conventional printing press such as gravure, ink-jet, rotogravure, flexographic, lithographic, offset, letterpress intaglio and/or screen process, or other printing process.

Preferably, the HRI layer, which is printed over the OVD, is also sufficiently thin as to allow viewing in transmission and reflectance. In other words the whole security element on the substrate allows a viewing in transmission and reflectance.

The curable composition may further comprise modifying additives.

Specific additives can be added to the composition to modify its chemicals and/or physical properties. Polychromatic effects can be achieved by the introduction of (colored) inorganic and/or organic pigments and/or solvent soluble dyestuffs into the ink, to achieve a range of coloured shades. By addition of a dye the transmission colour can be influenced. By the addition of fluorescent or phosphorescent materials the transmission and/or the reflection colour can be influenced.

Suitable colored pigments especially include organic pigments selected from the group consisting of azo, azomethine, methine, anthraquinone, phthalocyanine, perinone, perylene, diketopyrrolopyrrole, thioindigo, dioxazine, iminoisoindoline, iminoisoindolinone, quinacridone, flavanthrone, indanthrone, anthrapyrimidine and quinophthalone pigments, or a mixture or solid solution thereof; especially a dioxazine, diketopyrrolopyrrole, quinacridone, phthalocyanine, indanthrone or iminoisoindolinone pigment, or a mixture or solid solution thereof.

Colored organic pigments of particular interest include C.I. Pigment Red 202, C.I. Pigment Red 122, C.I. Pigment Red 179, C.I. Pigment Red 170, C.I. Pigment Red 144, C.I. Pigment Red 177, C.I. Pigment Red 254, C.I. Pigment Red 255, C.I. Pigment Red 264, C.I. Pigment Brown 23, C.I. Pigment Yellow 109, C.I. Pigment Yellow 110, C.I. Pigment Yellow 147, C.I. Pigment Orange 61, C.I. Pigment Orange 71, C.I. Pigment Orange 73, C.I. Pigment Orange 48, C.I. Pigment Orange 49, C.I. Pigment Blue 15, C.I. Pigment Blue 60, C.I. Pigment Violet 23, C.I. Pigment Violet 37, C.I. Pigment Violet 19, C.I. Pigment Green 7, C.I. Pigment Green 36, the 2,9-dichloro-quinacridone in platelet form described in WO08/055807, or a mixture or solid solution thereof.

Plateletlike organic pigments, such as plateletlike quinacridones, phthalocyanine, fluororubine, dioxazines, red perylenes or diketopyrrolopyrroles can advantageously be used.

Suitable colored pigments also include conventional inorganic pigments; especially those selected from the group consisting of metal oxides, antimony yellow, lead chromate, lead chromate sulfate, lead molybdate, ultramarine blue, cobalt blue, manganese blue, chrome oxide green, hydrated chrome oxide green, cobalt green and metal sulfides, such as cerium or cadmium sulfide, cadmium sulfoselenides, zinc ferrite, bismuth vanadate, Prussian blue, Fe₃O₄, carbon black and mixed metal oxides.

Examples of dyes, which can be used to color the curable composition, are selected from the group consisting of azo, azomethine, methine, anthraquinone, phthalocyanine, dioxazine, flavanthrone, indanthrone, anthrapyrimidine and metal complex dyes. Monoazo dyes, cobalt complex dyes, chrome complex dyes, anthraquinone dyes and copper phthalocyanine dyes are preferred.

The surface relief micro- and nanostructures are, for example, microlense arrays, micromirror arrays, optically variable devices (OVDs), which are, for example, diffractive optical variable image s (DOVIs). The term "diffractive optically variable image" as used herein may refer to any type of holograms including, for example, but not limited to a multiple plane hologram (e.g., 2-dimensional hologram, 3-dimensional hologram, etc.), a stereogram, and a grating image (e.g., dot-matrix, pixelgram, exelgram, kinegram, etc.).

Examples of an optically variable device are holograms or diffraction gratings, moire grating, lenses etc. These optical micro- and nanostructured devices (or images) are composed of a series of structured surfaces. These surfaces may have straight or curved profiles, with constant or random spacing, and may even vary from microns to millimetres in dimension. Patterns may be circular, linear, or have no uniform pattern. For example a Fresnel lens has a micro- and nanostructured surface on one side and a plane surface on the other. The micro- and nanostructured surface consists of a series of grooves with changing slope angles as the distance from the optical axis increases. The draft facets located between the slope facets usually do not affect the optical performance of the Fresnel lens.

A further aspect of the present invention is the use of the element as described above for the prevention of counterfeit or reproduction, on a document of value, right, identity, a security label or a branded good.

The compositions, comprising the metal oxide nanoparticles of the present invention, may be applied on top of the surface relief micro- and nanostructures in transparent windows, security threads and foils on the document of value, right, identity, a security label or a branded good.

The coatings of the present invention may be used in a method of manufacturing a security device described in EP2951023A1 comprising:
(a) providing a transparent substrate,
(b) applying a curable transparent material to a region of the substrate;
(c) in a first curing step, partially curing the curable transparent material by exposure to curing energy;
(d) applying a layer of the coating of the present invention (reflection enhancing material) to the curable transparent material;
(e) forming the partially cured transparent material and the layer of coating composition such that both surfaces of the layer of the coating of the present invention follow the contours of an optically variable effect generating relief structure,
(f) in a second curing step, fully curing the formed transparent material by exposure to curing energy such that the relief structure is retained by the formed transparent material.

Various aspects and features of the present invention will be further discussed in terms of the examples. The following examples are intended to illustrate various aspects and features of the present invention.

### Examples

### Measurement of pH of dispersions in ethanol

The aliquots of nanoparticles dispersions in ethanol were mixed with deionized water (1:1 v/v) under vigorous stirring and pH was measured in the resulting mixture by means of pH meter.

### Measurement of refractive indices of the coatings by ellipsometry

The nanoparticles-containing dispersions were coated onto silicon wafers to obtain coatings with thicknesses of at least 200 nm (thickness was measured with KLA Tencor Alpha-Step D-100 Stylus Profiler). The data was acquired in Reflectance mode at 65°, 70° and 75° angles, using Woollam M-2000-R19 ellipsometer, and the obtained data was fitted using the Cauchy model with WVase32 software.

### Measurement of particle size distribution by DLS

The measurements were performed using Malvern Zetasizer Nano ZS device with ca. 3% w/w dispersions of nanoparticles in a suitable solvent. Measurements in ethanol were performed in presence of acrylic acid (15% w/w of acrylic acid relative to particles weight was added). Measurements in water were performed in presence of 1 mM HCI. D10, D50 and D90 values are given for volume distributions.

### Measurement of solids content

The solids content of powders and dispersions was determined using Mettler-Toledo HR-73 halogen moisture analyzer at 100°C.

### Measurement of total amount of volatile surface-modifying compounds

The total amount of volatile surface-modifying compounds was determined in dispersions after neutralization step as weight loss in the range 200-600°C relative to the residue at 600°C in thermogravimetric analysis using TGA/DSC 3+ thermogravimetric analyser from Mettler-Toledo, with the proviso that the highest boiling solvent in the composition has a boiling point of below about 170°C. About 20 to 40 mg of dispersion sample was filled in a tared aluminum crucible, sealed immediately to avoid weight loss before experiment and weighed. The exact mass of sample was recorded. The aluminum crucible is put in the TGA oven at 30°C. The lid of the crucible is pierced at the time. Heating rate was 10°C/min, the measurements were done under nitrogen flow in the range from 30 to 600°C.

### XRD measurements

Powder samples were loaded on to a special flat plate Silicon sample holder, taking special care on producing a flat and smooth surface with the correct alignment to the sample holder zero-reference to avoid large systematic errors. The silicon sample holder was manufactured such that the it does not produce sharp diffraction features but only a weak and smooth background.

The sample on the sample holder was loaded in to a Panalytical 'XPert3 Powder equipped with a sealed Cu tube producing a characteristic X-ray lines Cu K_{α} and Cu K_{β} with wavelengths λ₁= 1.54056 Å (Cu K_{α1}), λ₂= 1.54439 Å (Cu K_{α2}), l₂/l₁ = 0.5 and λ₂= 1.3922 Å (Cu K_{β}). The contribution of the latter (Cu K_{β}) was removed introducing a Ni-filter on the incident beam of the diffractometer right after the Cu-tube.

Diffraction data was collected from 10 to 80 °2θ, using a step of 0.026 °2θ for a total time of 2h and spinning the sample around its axis at a rate of 0.13 rate/s in order to increase the sampling statistic.

The analysis of the diffraction patterns in terms of crystallographic phase analysis and average domain size was performed using the Panalytical HighScore software (v 4.8+) and the Bruker Topas6 program, obtaining consistent results.

The volume weighted domain size of diffraction (Dv) was evaluated using the Scherrer equation (B.E. Warren, X-Ray Diffraction, Addison-Wesley Publishing Co., 1969) Dv = K λ / [β cos(θ)], where K(~1) is the shape factor, dependent on the shape and reciprocal space direction, λ the wavelength, β the integral breadth of the diffraction peak and θ the scattering half-angle. To ensure a correct determination of the Dv, the integral breadth β was amended of the instrumental contribution. To achieve this, the line-broadening of the powder reference material LaB₆ was measured and evaluated according to the same procedure, as described above.

### Synthesis Example 1 (see PCT/EP2021/072873)

### Step 1. Synthesis of TiO₂ nanoparticles

All operations were carried out under dry nitrogen atmosphere. Di(propylene glycol) dimethyl ether (400 g) was placed in a 1 L double-wall reactor, equipped with a mechanical stirrer and a distillation head with a Liebig condenser. 2,5-Dimethyl-2,5-hexanediol (234 g) was added, followed by addition of tetraethyl orthotitanate (273.8 g). The mixture was heated to 65°C over 30 min with stirring and was kept for 15 min at this temperature. Titanium tetrachloride (75.9 g) was added dropwise with stirring and the reaction mixture was heated to 130°C over 2 h, during which time distillation has begun. The reaction mixture was stirred at 125-130°C internal temperature (with constant jacket temperature) for 3 h, upon which time distillate was collected and the beige precipitate has formed. After that, the internal reaction temperature was increased to 150°C over 2 h and stirring was continued for 5 h at this temperature. In total, 315 g distillate was collected.

The reaction mixture was cooled to 77°C, absolute ethanol (200 g) was added and stirring was continued for 5 h at 77°C. The mixture was cooled to 25°C, isopropanol (300 g) was added, the mixture was stirred for 30 min at 25°C and filtered under vacuum through a paper filter (20 µm pore size). The product was washed on the filter with iso-propanol (1000 g) and absolute ethanol (300 g) and dried on the filter for 1 min. The beige powder of TiO₂ nanoparticles agglomerates was obtained (247 g). Solids content at 100°C 61.7% w/w. XRD analysis showed anatase to be the predominant phase with crystalline domain size of 3.1±0.3 nm. D10(v) = 2.1 nm, D50(v) = 3.0 nm, D90(v) =4.8 nm (in 1 mM HCI in water).

### Step 2. Neutralization/re-dispersion of TiO₂ nanoparticles

The powder, obtained in Step 1 (227 g), was resuspended in absolute ethanol (450 g). The temperature of the mixture was raised to 75°C, acetylacetone (5.6 g) was added and the pH of the mixture was brought to 4.5 via dropwise addition of 24% w/w potassium ethylate solution in absolute ethanol (98.6 g) with stirring at 75°C. Upon addition of potassium ethylate solution the turbidity of the mixture was strongly reduced due to the re-dispersion of TiO₂ nanoparticles agglomerates. The mixture was cooled to 25°C and filtered through the depth filter sheet (Seitz^{®} KS 50) under 2.5 Bar pressure to remove the formed potassium chloride along with the traces of non-re-dispersed TiO₂ nanoparticles. The brownish filtrate, containing re-dispersed TiO₂ nanoparticles, was collected (730 g). Solids content at 100°C 18.1% w/w. D10(v) = 2.0 nm, D50(v) = 2.8 nm, D90(v) =4.2 nm (in presence of acrylic acid in ethanol). Total amount of volatile surface-modifying compounds as determined by thermogravimetric analysis (weight loss in the range 200-600°C relative to the residue at 600°C) was found to be 28 %; residue at 600°C was found to be 14.1% based on the total weight of dispersion.

### Synthesis Example 2

### Step 1. Synthesis of TiO₂ nanoparticles

All operations were carried out under dry nitrogen atmosphere. 1-Methoxy-2-propanol (1060 g) was placed in a 2 L double-wall reactor, equipped with a mechanical stirrer and a reflux condenser at RT. Titanium tetraisopropylate (454.4 g) was added in one portion, upon which the temperature rose to 34°C. The mixture was cooled to 25°C and stirred for 1 h. Then a mixture of water (58.2 g) and 37% w/w hydrochloric acid (90.8 g) was added in one portion with stirring, upon which the temperature rose to ca. 40°C. The reaction mixture was heated from 40°C to 85°C over 90 min and was stirred for 4 h at this temperature.

The reaction mixture was cooled to 25°C and filtered under vacuum through a paper filter (20 µm pore size). The product was washed on the filter with absolute ethanol (800 g) slightly dried on the filter for 2 min. The off-white powder of TiO₂ nanoparticles agglomerates was obtained (179.5 g). Solids content at 100°C 64.4% w/w. XRD analysis showed anatase to be the predominant phase with crystalline domain size of 3.7±0.9 nm. D10(v) = 2.5 nm, D50(v) = 3.8 nm, D90(v) =7.4 nm (in 1 mM HCI in water).

### Step 2. Neutralization/re-dispersion of TiO₂ nanoparticles

The powder, obtained in Step 1 (169.3 g), was resuspended in absolute ethanol (377 g). The temperature of the mixture was raised to 75°C, acetylacetone (6.54 g) was added and the pH of the mixture was brought to 4.6 via dropwise addition of 24% w/w potassium ethylate solution in absolute ethanol (62.6 g) with stirring at 75°C. Upon addition of potassium ethylate solution the turbidity of the mixture was strongly reduced due to the re-dispersion of TiO₂ nanoparticles agglomerates. The mixture was cooled to 25°C and filtered through the depth filter sheet (Seitz^{®} KS 50) under 2.5 Bar pressure to remove the formed potassium chloride along with the traces of non-re-dispersed TiO₂ nanoparticles. The slightly brownish filtrate, containing re-dispersed TiO₂ nanoparticles, was collected (572.5 g). Solids content at 100°C 18.4% w/w. D10(v) = 2.2 nm, D50(v) = 3.0 nm, D90(v) = 6.4 nm (in presence of acrylic acid in ethanol). Total amount of volatile surface-modifying compounds as determined by thermogravimetric analysis (weight loss in the range 200-600°C relative to the residue at 600°C) was found to be 18.6%; residue at 600°C was found to be 15.5% based on the total weight of dispersion.

### Synthesis Example 3

### Modification of TiO₂ nanoparticles with peroxide groups.

Hydrogen peroxide (50% w/w solution in water, 1.81 g) was added dropwise to the dispersion (100 g) obtained in Step 2 of Example 1 with vigorous stirring at RT. The color of dispersion immediately changed to intensive yellow, which is characteristic to formation of Ti-O-O species. The mixture was stirred for 1 h at RT and then used for formulation experiments.

### Synthesis Example 4

### Modification of TiO₂ nanoparticles with peroxide groups

Hydrogen peroxide (50% w/w solution in water, 1.1 g) was added dropwise to the dispersion (100 g), obtained in Step 2 of Example 2 with vigorous stirring at RT. The color of dispersion immediately changed to intensive yellow, which is characteristic to formation of Ti-O-O species. The mixture was stirred for 1 h at room temperature and then used for formulation experiments.

### Example 1

### UV-curable formulations with peroxide-modified TiO₂ nanoparticles

Pentaerythritol tetraacrylate (X g) was added to the dispersion (5 g) obtained in Synth. Example Y and the mixture was homogenized by stirring for 5 min.

| **Formulation** | **Dispersion (5g) obtained in** | **Pentaerythritol tetraacrylate [g]** |
|---|---|---|
| F1 | **Synth. Example 3** | 0.444 |
| F2 | **Synth. Example** 3 | 0.222 |
| F3 | **Synth. Example** 4 | 0.455 |
| F4 | **Synth. Example** 4 | 0.277 |
| **F5**¹) | **Synth. Example** 1, **step** 2 | 0.452 |
| **F6**¹) | **Synth. Example** 1, **step** 2 | 0.226 |
| **F7**¹) | **Synth. Example** 2, **step** 2 | 0.460 |
| **F8**¹) | **Synth. Example** 2, **step** 2 | 0.230 |

### Synthesis Example 5

### Modification of TiO₂ nanoparticles with phosphate and peroxide groups

To the dispersion, obtained in Step 2 of Synth. Example 2 (54.3 g), a mixture of mono- and diethyl phosphate (1 g, 65% mono-ethyl phosphate) was added dropwise with vigorous stirring. The mixture was stirred at RT for 1 h to allow surface modification of particles and the pH of the mixture was brought to 5.0 via dropwise addition of 24 % w/w solution of potassium ethylate in absolute ethanol (2.2 g). The mixture was filtered through the depth filter sheet (Seitz^{®} KS 50) under 2.5 Bar pressure to remove the small amount of precipitate formed. Then 50% w/w solution of hydrogen peroxide in water (0.2 g) was added dropwise to the filtrate with vigorous stirring at RT. The color of dispersion immediately changed to intensive yellow, which is characteristic to formation of Ti-O-O species. The mixture was stirred for 1 h at RT, then concentrated on rotary evaporator and used for formulation experiments. Solids content at 100°C 27.5% w/w.

### Example 2

### UV-curable formulations with phosphate and peroxide-modified TiO₂ nanoparticles Formulation 9

1-Methoxy-2-propanol (1.25 g) and bisphenol A ethoxylate diacrylate (0.31 g, Mn = 468) were added to the dispersion obtained in Synthesis Example 5 (5 g) and the mixture was homogenized for 5 min.

### Formulation 10

1-Methoxy-2-propanol (1.25 g) and bisphenol A ethoxylate diacrylate (0.62 g, Mn =468) were added to the dispersion obtained in Synthesis Example 5 (5 g) and the mixture was homogenized for 5 min.

### Application Example 1

### Evaluation of chemical fastness properties and mechanical stability of coatings

A PET foil (Melinex 506) was coated with a UV-curable varnish (Lumogen OVD 311, commercially available from BASF) using a wired K Hand Coater #1 and thus obtained coating was cured using a medium pressure mercury UV lamp (total UV dose ca. 350 mJ/cm²). The formulations F1 to F10, prepared in Examples 1, 2 and 3, were separately coated onto this substrate using a wired K Hand Coater #2 (12 µm wet coating thickness), dried with an air-dryer at 80°C for 10 seconds and cured using a medium pressure mercury UV lamp (total UV dose ca. 500 mJ/cm²) to obtain cured coatings.

Chemical fastness was evaluated by immersing the coated foils after UV-curing into absolute ethanol, 20% w/w solution of acetic acid in water, 100% acetic acid, 5% w/w solution of NaOH in water or 5% HCI solution in water for 30 minutes at room temperature. After that, the foils were rinsed with deionized water and dried with an air-dryer at room temperature. The dry foils were assessed visually (reflectance color, caused by interference, and defects in coatings were observed) using a grayscale note from 0 to 4 (0 - coating completely disappeared, 1 - major change; more than 50% damaged, 2 - considerable change; less than 50% damaged, 3 - minor changes, 4 - coating unchanged), as compared to the untreated reference.

Mechanical stability of the coatings was evaluated by manually rubbing the coating once with a nylon glove and visually assessing the behavior using a note of 0, or 1 (0 - white traces on the coating, 1 - coating unchanged).

The results of evaluations are presented in Table 1.

**Table 1.**

| | F1 | F2 | F3 | F4 | F5 | F6 | F7 | F8 | F9 | F10 |
|---|---|---|---|---|---|---|---|---|---|---|
| Ethanol | 4 | 3 | 4 | 4 | 1 | 1 | 1 | 1 | 4 | 4 |
| 20% acetic acid | 4 | 4 | 4 | 4 | 1 | 1 | 1 | 1 | 4 | 4 |
| 100% acetic acid | 4 | 3 | 4 | 3 | 0 | 0 | 0 | 0 | 4 | 4 |
| 5 % NaOH in water | 2 | 1 | 4 | 2 | 1 | 1 | 1 | 1 | 2 | 4 |
| 5% HCI in water | 3 | 1 | 4 | 4 | 0 | 0 | 1 | 1 | 2 | 4 |
| Mechanical stability | 1 | 1 | 1 | 1 | 0 | 0 | 0 | 0 | 1 | 1 |
| Refractive index at 589 nm wavelength | 1.71 | 1.80 | 1.72 | 1.83 | 1.70 | 1.80 | 1.71 | 1.82 | 1.85 | 1.74 |

## Claims

1. A composition, comprising
(A) titanium dioxide nanoparticles,
(A1) which have volume average diameter (Dv50) in the range of from 1 to 10 nm, preferably 1 to 8 nm, more preferably 2 to 6 nm;
(A2) which are modified with peroxo groups, and
(A2) which optionally comprise surface modifying agents selected from the group consisting of phosphates, phosphonates, beta-diketones, tertiary amines, carboxylic acids and silanes, or combinations thereof; and
(B) one, or more reactive (radically polymerizable) diluents, with the proviso that the composition comprises at least one reactive diluent having at least 2 ethylenically unsaturated groups in the molecule; and
(C) an organic solvent.

2. The composition according to claim 1, wherein the molar ratio of peroxo groups, introduced into reaction with TiO₂ nanoparticles in the form of inorganic or organic peroxide, to TiO₂ is between 0.01 to 0.3, preferably 0.01 to 0.2, more preferably 0.01 to 0.15, most preferably 0.02 to 0.1.

3. The composition according to claim 1, or 2, wherein the titanium dioxide nanoparticles modified with peroxo groups are prepared by treatment of the titanium dioxide nanoparticles with a peroxide which is selected from the group consisting of H₂O₂, H₂O₂-urea complex, alkali metal percarbonates, ketone peroxides and organic peracids.

4. The composition according to claim 3, wherein the amount of peroxide is in the range of from 0.5 to 5 % by weight peroxide, preferably 0.7 to 3 % by weight peroxide, more preferably 1.0 to 2.5% by weight peroxide based on the amount of peroxide and titanium dioxide nanoparticles.

5. The composition according to any of claims 1 to 4, wherein the reactive diluent having at least 2 ethylenically unsaturated groups in the molecule is selected from bis(4-vinylthiophenyl)sulfide, bis(4-methacryloylthiophenyl)sulfide, divinyladipate, dipropylene glycol diacrylate, tripropylene glycol diacrylate, dipropylene glycol dimethacrylate, tripropylene glycol dimethacrylate, diethylene glycol diacrylate, triethylene glycol diacrylate, diethylene glycol dimethacrylate, triethylene glycol dimethacrylate, butanediol diacrylate, butanediol dimethacrylate, hexanediol diacrylate, hexanediol dimethacrylate, octanediol diacrylate, octanediol dimethacrylate, nonanediol diacrylate, nonanediol dimethacrylate, decanediol diacrylate, decanediol dimethacrylate, cyclohexanediol diacrylate, cyclohexanediol dimethacrylate, cyclohexanedimethanol diacrylate, cyclohexanedimethanol dimethacrylate, (ethoxylated)neopentyl glycol diacrylate, (propoxylated)neopentyl glycol diacrylate, (ethoxylated)neopentyl glycol dimethacrylate, (propoxylated)neopentyl glycol dimethacrylate, trimethylolpropane triacrylate (TMPTA), trimethylolpropane trimethacrylate (TMPTMA), ethoxylated trimethylolpropane triacrylates, ethoxylated trimethylolpropane trimethacrylates, propoxylated trimethylolpropane triacrylates, propoxylated trimethylolpropane trimethacrylates, ethoxylated glycerol triacrylates, ethoxylated glycerol trimethacrylates, propoxylated glycerol triacrylates, propoxylated glycerol trimethacrylates, bistrimethylolpropane tetraacrylate, bistrimethylolpropane tetramethacrylate, ethoxylated bistrimethylolpropane tetraacrylates, propoxylated bistrimethylolpropane tetraacrylates, pentaerythritol tetraacrylate, pentaerythritol tetramethacrylate, ethoxylated pentaerythritol tetraacrylates, ethoxylated pentaerythritol tetramethacrylates, propoxylated pentaerythritol tetraacrylates, propoxylated pentaerythritol tetramethacrylates, dipentaerythritol hexaacrylate, ethoxylated dipentaerythritol hexaacrylates, propoxylated dipentaerythritol hexaacrylates and mixtures thereof.

6. The composition according to any of claims 1 to 5, wherein the reactive diluent (B) comprises reactive diluents having a refractive index above 1.53, especially above 1.60, such as for example, bis(4-vinylthiophenyl)sulfide, bis[4-(2,3-epoxypropylthio)phenyl]sulfide and bis(4-methacryloylthiophenyl)sulfide.

7. The composition according to any of claims 1 to 6, wherein the ratio of reactive diluent (B) to titanium dioxide nanoparticles (A) is in the range of from 10 to 100% w/w of reactive diluent (B), preferably 15 to 75% w/w of reactive diluent (B), more preferably 20 to 60% of reactive diluent (B) relative to titanium dioxide nanoparticles (A).

8. The composition according to any of claims 1 to 7, wherein the titanium dioxide nanoparticles (A) comprise surface modifying agents selected from the group consisting of phosphates, tertiary amines, beta-diketones, silanes and combinations thereof, especially phosphates.

9. A coating having a refractive index of greater than 1.6, especially of greater than 1.7, very especially of greater than 1.8, obtainable from the coating composition according to any of claims 1 to 8.

10. A method for forming a coating having a high refractive index on a substrate comprising the steps of:
a) providing a substrate, preferably carrying a surface relief nano- and/or microstructure;
b) applying the coating composition according to any of claims 1 to 8 to the substrate by means of wet coating, or printing;
c) removing the solvent; and
d) exposing the dry coating to actinic radiation, especially UV-light.

11. A security, or decorative element, comprising a substrate, which may contain indicia or other visible features in or on its surface, and on at least part of the said substrate surface, a coating according to claim 9, or a coating obtained according to the method according to claim 10.

12. A method for forming a surface relief micro- and nanostructure on a substrate comprising the steps of:
a) forming a surface relief micro- and/or nanostructure on a discrete portion of the substrate;
b) depositing the coating composition according to any of claims 1 to 8 on at least a portion of the surface relief micro- and/or nanostructure;
c) removing the solvent; and
d) curing the dry coating by exposing it to actinic radiation, especially UV-light; or
a method for forming a surface relief micro- and/or nanostructure on a substrate comprising the steps of
a') providing a sheet of base material, said sheet having an upper and lower surface;
b') depositing the coating composition according to any of claims 1 to 8 on at least a portion of the upper surface;
c') removing the solvent;
d') forming a surface relief micro- and/or nanostructure on at least a portion of the coating composition, such that said micro- and/or nanostructure is formed also in the base material, and
e') curing the coating composition by exposing it to actinic radiation, especially UV-light; or a method for forming a surface relief micro- and/or nanostructure on a substrate comprising the steps of
a") providing a sheet of base material, said sheet having an upper and lower surface;
b") depositing the coating composition according to any of claims 1 to 8 on at least a portion of the upper surface;
c") removing the solvent;
d") curing the dry coating by exposing it to actinic radiation, especially UV-light; and
e") forming a surface relief micro- and/or nanostructure on at least a portion of the coating composition, such that said micro- and/or nanostructure is formed also in the base material.

13. The method according to claim 12, wherein step a) comprises
a1) applying a curable compound to at least a portion of the substrate;
a2) contacting at least a portion of the curable compound with surface relief micro- and nanostructure forming means; and
a3) curing the curable compound.

14. Use of the coating composition according to any of claims 1 to 8 for coating diffractive optical elements (DOEs), holograms, manufacturing of optical waveguides and solar panels, light outcoupling layers for display and lighting devices, high dielectric constant (high-k) gate oxides and interlayer high-k dielectrics, anti-reflection coatings, etch and CMP stop layers, optical thin film filters, optical diffractive gratings and hybrid thin film diffractive grating structures, high refractive index abrasion-resistant coatings, in protection and sealing (OLED), or organic solar cells.

15. Use of the coating composition according to any of claims 1 to 8 for the production of a coating having a refractive index of greater than 1.6, especially of greater than 1.7, very especially of greater than 1.8.
